# EUROPEAN PATENT APPLICATION

(11) **EP 4 516 562 A1**
(43) Date of publication of application: **05.03.2025**
(21) Application number: 23859372.7
(22) Date of filing: 30.08.2023
(51) Int. Cl.: B60L 3/04, B60W 30/09, B60W 30/095

(54) **PARAMETER SETTING METHOD AND APPARATUS**

(30) Priority: 31.08.2022 CN 202211068601
(71) Applicant: Chery Automobile Co., Ltd., Wuhu, Anhui 241006 (CN)
(72) Inventor: CHEN, Wenming, Wuhu, Anhui 241006 (CN); FAN, Dinghong, Wuhu, Anhui 241006 (CN); CHEN, Shuai, Wuhu, Anhui 241006 (CN)
(74) Representative: Yang, Shu
(86) International application number: PCT/CN2023/115683
(87) International publication number: WO 2024/046343

(57) **Abstract**

A parameter setting method. The method comprises: determining a pre-collision level by means of parsing operation parameters of a vehicle before a collision occurs, and setting, according to the pre-collision level, a duration of unloading a voltage from an electric component, wherein the pre-collision level is used for representing the probability of the vehicle being about to collide. The parameter setting method is used for setting the duration for which a voltage is unloaded from an electric component. In this way, a fault caused by high-voltage load dump or excessively-fast unloading can be avoided. Also provided is an apparatus for implementing the parameter setting method.

## Description

### CROSS-REFERENCE TO RELATED APPLICATION

The present disclosure claims priority to Chinese Patent Application No. 202211068601.7, filed on August 31, 2022 and entitled "PROTECTION METHOD AND APPARATUS FOR HIGH-VOLTAGE UNLOADING BASED ON COLLISION PRE-JUDGEMENT LOGIC", which is incorporated herein by reference in its entirety.

### TECHNICAL FIELD

The present disclosure relates to a parameter setting method and apparatus.

### BACKGROUND OF THE INVENTION

With rapid development of new energy (such as electric energy) vehicles, a high-voltage safety field of new energy vehicles is a critical focus field for various vehicle factories currently, and high-voltage safety in collision is critical for breakthrough technologies. At present, as high-voltage platforms of electric vehicles increase, motor power and battery power increase and high-voltage safety in an accidental collision during high-speed driving has become more important.

The current common high-voltage safety protection in collision is mainly passive safety protection, in which the main measure is to disconnect a high-voltage relay within a certain period of time after a vehicle collision occurs to avoid safety problems arising from high-voltage wire harness exposure, short circuit and the like due to the collision.

### SUMMARY OF THE INVENTION

The present disclosure provides a parameter setting method and apparatus.

In a first aspect, a parameter setting method is provided. The method includes:
determining a pre-collision level of a vehicle according to operation parameters of the vehicle, where the pre-collision level is configured to represent a probability that the vehicle is about to crash; and
setting a duration of unloading a voltage from an electric component of the vehicle according to the pre-collision level.

Optionally, the operation parameters of the vehicle include:
a vehicle speed, acceleration, a gear, an accelerator pedal opening, a brake pedal stroke, an anti-lock braking system (ABS) activation state, an autonomous emergency braking (AEB) activation state, a distance between a forward-looking obstacle and the vehicle, a relative speed of the forward-looking obstacle and the vehicle, or any combination thereof.

Optionally, the pre-collision level of the vehicle is one of levels; and at different levels of the levels, set durations of unloading the voltage are different.

Optionally, the levels include a level zero, a level one, a level two and a level three ranked in an ascending order.

Optionally, each of the levels has corresponding conditions, and when the conditions corresponding to any one of the levels are satisfied, the any one of the levels is the pre-collision level; and the method satisfies at least one of following conditions:
conditions corresponding to the level zero include: conditions corresponding to levels other than the level zero among the levels are not satisfied, an accelerator pedal opening is greater than a first opening, a brake pedal opening is less than a second opening, or deceleration is less than first deceleration;
conditions corresponding to the level one include: a current gear is a forward D gear, the accelerator pedal opening is less than a third opening, the brake pedal opening is greater than a fourth opening, the deceleration is greater than the first deceleration and a current vehicle speed is greater than a first vehicle speed; or the ABS is activated;
conditions corresponding to the level two include: the current gear is a D gear, the ABS is activated, the accelerator pedal opening is less than a fifth opening, the brake pedal opening is greater than a sixth opening, a change rate of the brake pedal stroke is greater than a first change rate in a current braking cycle, the deceleration is greater than second deceleration, and the current vehicle speed is greater than a second vehicle speed; and
conditions corresponding to the level three include: the current gear is the D gear, the ABS is activated, the accelerator pedal opening is less than a seventh opening, the brake pedal opening is greater than an eighth opening, the change rate of the brake pedal stroke is greater than a second change rate in the current braking cycle, the deceleration is greater than third deceleration, and the current vehicle speed is greater than a third vehicle speed; or the current gear is the D gear, the AEB is activated, and a pre-collision duration is less than a first duration, and
where the pre-collision duration is calculated based on the distance between the forward-looking obstacle and the vehicle, and a relative speed of the forward-looking obstacle and the vehicle.

Optionally, the following parameters are calibrated through actual vehicle tests:
the third opening, the fifth opening, the third opening, the first opening, the first deceleration, the second deceleration, the third deceleration, the first deceleration, the fourth opening, the sixth opening, the eighth opening, the second opening, the first vehicle speed, the second vehicle speed, the third vehicle speed, the first change rate and the second change rate.

Optionally, the pre-collision duration is equal to the distance between the forward-looking obstacle and the vehicle divided by the relative speed of the forward-looking obstacle and the vehicle.

Optionally, the electric component has an initial duration of unloading the voltage; and setting the duration of unloading the voltage from the electric component of the vehicle according to the pre-collision level includes:
setting the duration of unloading the voltage from the electric component to the initial duration, when the pre-collision level is the level zero;
setting the duration of unloading the voltage from the electric component to half of the initial duration, when the pre-collision level is the level one;
setting the duration of unloading the voltage from the electric component to a shortest duration of unloading the voltage from the electric component, when the pre-collision level is the level two, where the shortest duration of unloading the voltage from the electric component is less than the half of the initial duration; and
setting the duration of unloading the voltage from the electric component to the shortest duration of unloading the voltage from the electric component, closing a heat pump control system, a compressor control system, a heater positive temperature coefficient (PTC) control system, a motor control system, a direct current/direct current (DC/DC) control system and/or a collision pre-judgement module configured to determine the pre-collision level, controlling a motor to execute an active stability control (ASC) system at a maximum capability, controlling a coolant flow to a maximum, and controlling a fan speed to a maximum, when the pre-collision level is the level three.

Optionally, the vehicle includes a DC/DC converter configured to convert one DC voltage to another DC voltage; and an operation voltage of the electric component is greater than the minimum of the one DC voltage and the another DC voltage.

In a second aspect, a parameter setting apparatus is provided, and the parameter setting apparatus includes a collision pre-judgement module and an unloading parameter processing module,
the collision pre-judgement module is configured to determine a pre-collision level of a vehicle according to operation parameters of the vehicle, where the pre-collision level is configured to represent a probability that the vehicle is about to crash; and
the unloading parameter processing module is configured to set a duration of unloading a voltage from an electric component of the vehicle, according to the pre-collision level.

Optionally, the operation parameters of the vehicle include:
a vehicle speed, acceleration, a gear, an accelerator pedal opening, a brake pedal stroke, an ABS activation state, an AEB activation state, a distance between a forward-looking obstacle and the vehicle, a relative speed of the forward-looking obstacle and the vehicle, or any combination thereof.

Optionally, the pre-collision level of the vehicle is one of levels; and at different levels of the levels, set durations of unloading the voltage are different.

Optionally, the levels include a level zero, a level one, a level two and a level three ranked in an ascending order.

Optionally, each of the levels has corresponding conditions, and when conditions corresponding to any one of the levels are satisfied, the any one of the levels is the pre-collision level; and the method satisfies at least one of following conditions:
conditions corresponding to the level zero include: conditions corresponding to levels other than the level zero among the levels are not satisfied, an accelerator pedal opening is greater than a first opening, a brake pedal opening is less than a second opening or deceleration is less than first deceleration;
conditions corresponding to the level one include: a current gear is a forward D gear, the accelerator pedal opening is less than a third opening, the brake pedal opening is greater than a fourth opening, the deceleration is greater than the first deceleration and a current vehicle speed is greater than a first vehicle speed; or the ABS is activated;
conditions corresponding to the level two include: the current gear is a D gear, the ABS is activated, the accelerator pedal opening is less than a fifth opening, the brake pedal opening is greater than a sixth opening, a change rate of the brake pedal stroke is greater than a first change rate in a current braking cycle, the deceleration is greater than second deceleration, and the current vehicle speed is greater than a second vehicle speed; and
conditions corresponding to the level three include: the current gear is the D gear, the ABS is activated, the accelerator pedal opening is less than a seventh opening, the brake pedal opening is greater than an eighth opening, the change rate of the brake pedal stroke is greater than a second change rate in the current braking cycle, the deceleration is greater than third deceleration, and the current vehicle speed is greater than a third vehicle speed; or the current gear is the D gear, the AEB is activated, and a pre-collision duration is less than a first duration, and
where the pre-collision duration is calculated based on the distance between the forward-looking obstacle and the vehicle, and a relative speed of the forward-looking obstacle and the vehicle.

Optionally, following parameters are calibrated through actual vehicle tests:
the third opening, the fifth opening, the third opening, the first opening, the first deceleration, the second deceleration, the third deceleration, the first deceleration, the fourth opening, the sixth opening, the eighth opening, the second opening, the first vehicle speed, the second vehicle speed, the third vehicle speed, the first change rate and the second change rate.

Optionally, the pre-collision duration is equal to the distance between the forward-looking obstacle and the vehicle divided by the relative speed of the forward-looking obstacle and the vehicle.

Optionally, the electric component has an initial duration of unloading the voltage; and the unloading parameter processing module is configured to:
set the duration of unloading the voltage from the electric component to the initial duration, when the pre-collision level is the level zero;
set the duration of unloading the voltage from the electric component to half of the initial duration, when the pre-collision level is the level one;
set the duration of unloading the voltage from the electric component to a shortest duration of unloading the voltage from the electric component, when the pre-collision level is the level two, where the shortest duration of unloading the voltage from the electric component is less than the half of the initial duration; and
set the duration of unloading the voltage from the electric component to the shortest duration of unloading the voltage from the electric component, close a heat pump control system, a compressor control system, a heater PTC control system, a motor control system, a DC/DC control system and/or a collision pre-judgement module configured to determine the pre-collision level, control a motor to execute an ASC system at a maximum capability, control a coolant flow to a maximum, and control a fan speed to a maximum, when the pre-collision level is the level three.

In a third aspect, a vehicle is provided. The vehicle includes the parameter setting apparatus according to the second aspect.

### BRIEF DESCRIPTION OF DRAWINGS

FIG. 1 shows a schematic diagram of collision pre-judgement according to embodiments of the present disclosure; and
FIG. 2 shows a schematic diagram of high-voltage unloading parameter processing according to embodiments of the present disclosure.

### DETAILED DESCRIPTION

For clearer descriptions of the principles, technical solutions and advantages in embodiments of the present disclosure, the technical solutions in the embodiments of the present disclosure will be clearly and completely described below with reference to the accompanying drawings in the embodiments of the present disclosure. Obviously, the embodiments described are merely some but not all embodiments of the present disclosure. Based on the embodiments of the present disclosure, all other embodiments derived by a person of ordinary skill in the art without creative efforts shall fall within the protection scope of the present disclosure.

In related art, high-voltage safety protection in collision is mainly passive safety protection, in which a main measure is to disconnect a high-voltage relay within a certain period of time after a vehicle collision occurs.

One technology is to add a power-off switch at a driving power supply terminal of the relay or a high-voltage wiring harness terminal. The power-off switch is directly driven by a current of an air bag controller. After a collision occurs, the airbag controller generates the current and the current acts on the power-off switch such that the power-off switch may cut off the high-voltage relay or a high-voltage wiring harness within 30 milliseconds (ms) or less.

Another technology still remains that an air bag controller sends a pulse width modulation (PWM) signal or a controller area network (CAN) signal to a vehicle controller or a battery management system. After the battery management system determines the PWM signal or the CAN signal, the switch is turned off. This solution takes a little longer time to disconnect the relay, but it may also control the time within 100ms.

However, the key of high-voltage passive safety protection in collision lies in a duration of turning off a high voltage after a collision occurs; and the shorter the duration is, the higher the safety is and the lower the probability of fire and electricity leakage is. Moreover, required durations of turning off the high voltage are different under different collision conditions. However, in the related art, it is impossible to achieve different durations of turning off the high voltage according to different collision conditions. Moreover, for the above two technologies, when the relay is disconnected, the relay terminal may carry a relatively large current load. In this case, when the relay or a high-voltage wire is disconnected, the relay may stick or spark at breaking, which poses a greater potential safety hazard.

Based on this, the present disclosure proposes a parameter setting method and apparatus. In the present disclosure, before a collision occurs, different durations of turning offa high voltage are set according to different collision conditions, so that a high-voltage load is reduced within different minimum times, thereby enhancing the safety of turning off high-voltage in a collision on the whole.

In a first aspect, the present disclosure provides a method for controlling an electric component. The method includes:
determining a pre-collision level of a vehicle according to operation parameters of the vehicle, where the-collision level is configured to represent a probability that the vehicle is about to crash; and setting a duration of unloading a voltage from an electric component of the vehicle (i.e. a duration of turning off a voltage of the electric component), according to the pre-collision level.

The electric component may be a high-voltage electric component. For example, an operation voltage of the electric component is greater than the minimum of one DC voltage and another DC voltage, and a DC/DC converter is configured to convert one DC voltage to another DC voltage.

The electric component may also not be a high-voltage electric component, which is not limited in the present disclosure.

The operation parameters of the vehicle may come from parameters of interaction among controllers in the vehicle. The pre-collision level of the vehicle may be determined according to relevant parameters of interaction among the controllers in the vehicle.

During implementation, the operation parameters of the vehicle when a collision is about to be triggered are acquired, the possibility of collision is identified through the parameters, different pre-collision levels are classified, and the unloading duration is pre-intervened and adjusted, so that the probability of high-voltage on-load cutoff is effectively avoided and high-voltage safety is enhanced.

The unloading time for each component is adjustable. For example, for a high-voltage compressor used in an air conditioner, if a duration of unloading a voltage is set to 1 second (s) when it leaves the factory and the best unloading performance of the compressor itself (the shortest duration of unloading the voltage from the compressor) is 0.2 second. Then, according to different pre-collision levels, the unloading time becomes 0.5 second for a first-level pre-collision, and the unloading time becomes 0.2 second for a second-level pre-collision. Pre-collision states are graded and durations of unloading the voltage are set according to the levels (for example, the unloading time is shortened as the pre-collision level ascends), which can shorten the duration of unloading the voltage on the whole and meanwhile take the unloading capability of the electric component itself into account, thereby avoiding a fault caused by high-voltage load dump or excessively-fast unloading.

In the present disclosure, the operation parameters of the vehicle include a vehicle speed, acceleration, a gear, an accelerator pedal opening, a brake pedal stroke, an ABS (Antilock Brake System) activation state, an AEB (Autonomous Emergency Braking) activation state, a distance between a forward-looking obstacle and the vehicle, and a relative speed of the forward-looking obstacle, the vehicle, or any combination thereof. The operation parameters of the vehicle may also include other parameters in addition to these parameters.

In the present disclosure, the pre-collision level of the vehicle may be one of levels; and at different levels of the levels, set durations of unloading the voltage are different. In this way, it is possible to set different durations of unloading the voltage for the electric component at different levels.

In an exemplary embodiment, the levels include a level zero, a level one, a level two and a level three ranked in an ascending order. The pre-collision level is any one of the level zero, the level one, the level two and the level three. Certainly, the levels may not be these four levels.

Each of the levels has corresponding conditions, and when the conditions corresponding to any one of the levels are satisfied, the any one of the levels is the pre-collision level.

Optionally, conditions a1 corresponding to the level zero include: no pre-collision whose level is greater than the level zero is triggered, or the accelerator pedal opening is greater than a first opening (parameter U4), or a brake pedal opening is less than a second opening (parameter B4), or deceleration is less than first deceleration (parameter A4).

Optionally, conditions corresponding to the level one include: condition b1 or b2 is satisfied. Condition b1: a current gear is a forward drive (D) gear, the accelerator pedal opening is less than a third opening (parameter U1), the brake pedal opening is greater than a fourth opening (parameter B1), the deceleration is greater than the first deceleration (parameter A1) and a current vehicle speed is greater than a first vehicle speed (parameter V1). Condition b2: the ABS is activated.

Optionally, conditions corresponding to the level two include: the current gear is a D gear, the ABS is activated, the accelerator pedal opening is less than a fifth opening (parameter U2), the brake pedal opening is greater than a sixth opening (parameter B2), a change rate of the brake pedal stroke is greater than a first change rate in a current braking cycle (parameter db1), the deceleration is greater than second deceleration (parameter A2), and the current vehicle speed is greater than a second vehicle speed (parameter V2).

Optionally, conditions corresponding to the level three include: condition d1 or d2 is satisfied. Condition d1: the current gear is the D gear, the ABS is activated, the accelerator pedal opening is less than a seventh opening (parameter U3), the brake pedal opening is greater than an eighth opening (parameter B3), the change rate of the brake pedal stroke is greater than a second change rate in the current braking cycle (parameter db2), the deceleration is greater than third deceleration (parameter A3), and the current vehicle speed is greater than a third vehicle speed (parameter V3); and condition d2: the current gear is the D gear, the AEB is activated, and a pre-collision duration is less than a first duration t1, where the pre-collision duration is calculated based on the distance between the forward-looking obstacle and the vehicle, and a relative speed of the forward-looking obstacle and the vehicle. For example, the pre-collision duration is equal to the distance between the forward-looking obstacle and the vehicle divided by the relative speed.

During implementation, by parsing the operation parameters of the vehicle before a collision occurs, the collision levels are classified into four levels to distinguish emergency situations in which the collision is about to occur, so that control logic is effectively formulated after pre-collision is confirmed. Thus, the duration of unloading the voltage (which can also be called an unloading parameter) in pre-collision can be finely processed.

Optionally, in the present disclosure, the following parameters are calibrated through actual vehicle tests: U1, U2, U3, U4, A1, A2, A3, A4, B1, B2, B3, B4, V1, V2, V3, db1 and db2.
During implementation, U1, U2, U3 and U4 should be as small as possible, and usually range from 0% to 2%;
B1, B2, B3 and B4 usually range from 2% to 5%, which depends on the brake pedal opening under an idle stroke of a brake pedal and an accelerator pedal of the vehicle, and should be a little bigger on the basis of the brake pedal opening under the idle stroke;
A1, A2, A3 and A4 need to be calibrated for actual vehicles based on deceleration experience during driving, for example, A1 is 0.3, A2 is 0.4, A3 is 0.5, and A4 is 0.25; and the unit may be meters per second squared; and
V1, V2 and V3 range from 0 to 15 and the unit may be meters per second.

For example, the change rate db1 is 300% per second, and the change rate db2 is 500% changes per second.

In fact, parameters among the above parameters except the pedal opening, which refers to the idle stroke, all need to be calibrated for actual vehicles during driving and are calibrated during extreme driving. Therefore, the best calibration method for these parameters is to combine driving simulation analysis with actual vehicle performance. There will be some slight differences in parameters corresponding to various vehicle models.

In the present disclosure, the electric component has an initial duration of unloading the voltage; and setting the duration of unloading the voltage from the electric component of the vehicle according to the pre-collision level includes:
when the pre-collision level is the level zero, setting the duration of unloading the voltage from the electric component to the initial duration;
when the pre-collision level is the level one, setting the duration of unloading the voltage from the electric component to half of the initial duration;
when the pre-collision level is the level two, setting the duration of unloading the voltage from the electric component to the shortest duration of unloading the voltage from the electric component, where the shortest duration of unloading the voltage from the electric component is less than the half of the initial duration; and
when the pre-collision level is the level three, setting the duration of unloading the voltage from the electric component to the shortest duration of unloading the voltage from the electric component, closing a heat pump control system, a compressor control system, a heater PTC control system, a motor control system, a DC/DC control system, a collision pre-judgement module configured to determine the pre-collision level, or any combination thereof, controlling the motor to execute an ASC system at a maximum capability, controlling a coolant flow to the maximum, and controlling a fan speed to the maximum.

Optionally, when the pre-collision level is the level three, the heat pump control system, the compressor control system, the heater PTC control system, the motor control system, the DC/DC control system and the collision pre-judgement module may be closed. Or, when the pre-collision level is the level three, the heat pump control system, the compressor control system, the heater PTC control system, the motor control system, and the collision pre-judgement module may be closed.

The present disclosure may be executed by a parameter setting apparatus. The parameter setting apparatus includes a collision pre-judgement module and a high-voltage unloading parameter processing module. The collision pre-judgement module is configured to determine the above pre-collision level and send a signal of the pre-collision level to the high-voltage unloading parameter processing module. The high-voltage unloading parameter processing module is configured to:
when receiving a zero-level pre-collision signal (a signal of the level zero), control each high-voltage electric component to be implemented according to an initial unloading parameter;
when receiving a first-level pre-collision signal (a signal of the level one), adjust the unloading parameter (including a control instruction terminal parameter and an execution terminal parameter) of each high-voltage electric component to half of the initial unloading parameter, where the unloading time is shortened by half and high-voltage energy management is executed according to original demands;
when receiving a second-level pre-collision signal (a signal of the level two), adjust the unloading parameter of each high-voltage electric component at its highest unloading capability, where high-voltage energy management is executed according to original demands; and
when receiving a third-level pre-collision signal (a signal of the level three), adjust the unloading parameter of each high-voltage electric component at its highest unloading capability, where a high-voltage energy management module requests to close high-voltage electric components except a DC/DC (high-voltage DC and low-voltage DC) conversion controller, a motor executes the ASC system at the highest capability of the system and consumes excess energy by body heating, and meanwhile, a control system controls a coolant flow to the maximum and a fan speed to the maximum.

During implementation, the high-voltage energy management module is a control module for power enablement and power sizing of high-voltage electric components, and directly cuts off other electric devices except devices using low-voltage loads in response to an emergency pre-collision.

The unloading parameter of each high-voltage electric component is adjusted at its highest unloading capability, which refers to the highest unloading capability that the corresponding high-voltage electric component can achieve in the case that a collision is about to occur, and the highest unloading capability is clear and unique in the case that the collision is about to occur.

The unloading time is shortened while the unloading capability of the electric component itself is taken into account, so that a fault caused by high-voltage load dump or excessively-fast unloading is avoided.

After the collision is pre-determined, the vehicle brakes and decelerates, and an engine rotor cuts magnetic field lines to generate a reverse current, causing a motor's counter electromotive force. This current needs to be used up by the motor itself through internal resistance heating. In the present disclosure, an air-conditioning thermal management system receives the pre-collision level, increases the coolant flow and the fan speed according to the level to quickly achieve better cooling, and increases the cooling capability of a cooling circuit, thereby avoiding motor overheating.

**In** a second aspect, the present disclosure provides an apparatus for controlling an electric component. The apparatus includes a collision pre-judgement module and a high-voltage unloading parameter processing module.

The collision pre-judgement module is configured to determine a pre-collision level of a vehicle according to operation parameters of the vehicle, where the pre-collision level is configured to represent a probability that the vehicle is about to crash.

A setting module is configured to set a duration of unloading a voltage from an electric component of the vehicle (i.e., a duration of turning offa voltage of the electric component) according to the pre-collision level.

The electric component may be a high-voltage electric component. The setting module may be called the high-voltage unloading parameter processing module. For example, an operation voltage of the electric component is greater than the minimum of one DC voltage and another DC voltage, and a DC/DC converter is configured to convert one DC voltage to another DC voltage.

The operation parameters of the vehicle may come from parameters of interaction among controllers in the vehicle. The pre-collision level of the vehicle may be determined according to the relevant parameters of interaction among the controllers in the vehicle.

The collision pre-judgement module is configured to acquire parameters of controllers of the vehicle when a collision is about to be triggered, and determine the pre-collision level of the vehicle that is about to crash based on the parameters.

The high-voltage unloading parameter processing module is configured to adjust unloading parameters of high-voltage electric components of the vehicle according to the pre-collision level.

In the present disclosure, the operation parameters of the vehicle include a vehicle speed, acceleration, a gear, an accelerator pedal opening, a brake pedal stroke, an ABS activation state, an AEB activation state, a distance between a forward-looking obstacle and the vehicle, a relative speed of the forward-looking obstacle and the vehicle, or any combination thereof.

In the present disclosure, the pre-collision level of the vehicle may be one of levels; and at different levels of the levels, set durations of unloading the voltage are different. In this way, it is possible to set different durations of unloading the voltage for the electric component at different levels.

In an exemplary embodiment, the levels include a level zero, a level one, a level two and a level three ranked in an ascending order. The pre-collision level is any one of the level zero, the level one, the level two and the level three. Certainly, the levels may not be these four levels.

Each of the levels has corresponding conditions, and when the conditions corresponding to any one of the levels are satisfied, the any one of the levels is the pre-collision level.

Optionally, the conditions a1 corresponding to the level zero include: no pre-collision whose level is greater than the level zero is triggered, or the accelerator pedal opening is greater than a first opening (parameter U4), or a brake pedal opening is less than a second opening (parameter B4), or deceleration is less than first deceleration (parameter A4).

Optionally, conditions corresponding to the level one include: condition b1 or b2 is satisfied. Condition b1: a current gear is a forward D gear, the accelerator pedal opening is less than a third opening (parameter U1), the brake pedal opening is greater than a fourth opening (parameter B1), the deceleration is greater than the first deceleration (parameter A1) and a current vehicle speed is greater than a first vehicle speed (parameter V1). Condition b2: the ABS is activated.

Optionally, conditions corresponding to the level two include: the current gear is a D gear, the ABS is activated, the accelerator pedal opening is less than a fifth opening (parameter U2), the brake pedal opening is greater than a sixth opening (parameter B2), a change rate of the brake pedal stroke is greater than a first change rate in a current braking cycle (parameter db1), the deceleration is greater than second deceleration (parameter A2), and the current vehicle speed is greater than a second vehicle speed (parameter V2).

Optionally, conditions corresponding to the level three include: condition d1 or d2 is satisfied. Condition d1: the current gear is the D gear, the ABS is activated, the accelerator pedal opening is less than a seventh opening (parameter U3), the brake pedal opening is greater than an eighth opening (parameter B3), the change rate of the brake pedal stroke is greater than a second change rate in the current braking cycle (parameter db 2), the deceleration is greater than third deceleration (parameter A3), and the current vehicle speed is greater than a third vehicle speed (parameter V3); and condition d2: the current gear is the D gear, the AEB is activated, and a pre-collision duration is less than a first duration t1, where the pre-collision duration is calculated based on the distance between the forward-looking obstacle and the vehicle, and a relative speed of the forward-looking obstacle and the vehicle. For example, the pre-collision duration is equal to the distance between the forward-looking obstacle and the vehicle divided by the relative speed.

Optionally, in the present disclosure, the following parameters for the pre-collision level are calibrated through actual vehicle tests: U1, U2, U3, U4, A1, A2, A3, A4, B1, B2, B3, B4, V1, V2, V3, db1 and db2.
During implementation, U1, U2, U3 and U4 should be as small as possible, and usually range from 0% to 2%;
B1, B2, B3 and B4 usually range from 2% to 5%, which depends on an idle stroke of a brake pedal and an accelerator pedal of the vehicle, and should be a little bigger on the basis of the idle stroke;
A1, A2, A3 and A4 need to be calibrated for actual vehicles based on deceleration experience during driving, and for example, A1 is 0.3, A2 is 0.4, A3 is 0.5, and A4 is 0.25; and
V1, V2 and V3 range from 0 to 15.

For example, the change rate db1 is 300% per second, and the change rate db2 is 500% per second.

In fact, parameters among the above parameters except the pedal opening, which refers to the idle stroke, all need to be calibrated for actual vehicles during driving and are calibrated during extreme driving. Therefore, the best calibration method for these parameters is to combine driving simulation analysis with actual vehicle performance. There will be some slight differences in parameters corresponding to various vehicle models.

In the present disclosure, the electric component has an initial duration of unloading the voltage; and the setting module is configured to:
when the pre-collision level is the level zero, set the duration of unloading the voltage from the electric component to the initial duration;
when the pre-collision level is the level one, set the duration of unloading the voltage from the electric component to half of the initial duration;
when the pre-collision level is the level two, set the duration of unloading the voltage from the electric component to the shortest duration of unloading the voltage from the electric component, where the shortest duration of unloading the voltage from the electric component is less than the half of the initial duration; and
when the pre-collision level is the level three, set the duration of unloading the voltage from the electric component to the shortest duration of unloading the voltage from the electric component, close a heat pump control system, a compressor control system, a heater PTC control system, a motor control system, a DC/DC control system, a collision pre-judgement module configured to determine the pre-collision level, or any combination thereof, control a motor to execute an ASC system at a maximum capability, control a coolant flow to the maximum, and control a fan speed to the maximum.

Optionally, when the pre-collision level is the level three, the heat pump control system, the compressor control system, the heater PTC control system, the motor control system, the DC/DC control system and the collision pre-judgement module may be closed. Or, when the pre-collision level is the level three, the heat pump control system, the compressor control system, the heater PTC control system, the motor control system, and the collision pre-judgement module may be closed.

In the present disclosure, when receiving a zero-level pre-collision signal, the high-voltage unloading parameter processing module controls each high-voltage electric component to be implemented according to an initial unloading parameter (such as the above initial duration);
when receiving a first-level pre-collision signal, the high-voltage unloading parameter processing module adjusts the unloading parameter (including a control instruction terminal parameter and an execution terminal parameter) of each high-voltage electric component to half of the initial unloading parameter, where the unloading time is shortened by half and high-voltage energy management is executed according to original demands;
when receiving a second-level pre-collision signal, the high-voltage unloading parameter processing module adjusts the unloading parameter of each high-voltage electric component at its highest unloading capability, where high-voltage energy management is executed according to original demands; and
when receiving a third-level pre-collision signal, the high-voltage unloading parameter processing module adjusts the unloading parameter of each high-voltage electric component at its highest unloading capability, where a high-voltage energy management module requests to close high-voltage electric components except a DC/DC, a motor executes the ASC at the highest capability of the system and consumes excess energy by body heating, and meanwhile, a control system controls a coolant flow to the maximum and a fan speed to the maximum.

In order to enable those skilled in the art to better understand the present disclosure, the principles of the present disclosure are explained as follows in conjunction with the accompanying drawings.

The present disclosure includes two modules, i.e., the collision pre-judgement module and the high-voltage unloading parameter processing module.

The collision pre-judgement module mainly integrates relevant parameters of interaction among controllers of the vehicle to determines working conditions of the vehicle that will collide, including various scenarios of complex driving by a driver. The present disclosure sets pre-collision of four levels in the collision pre-judgement module, i.e., zero-level pre-collision, first-level pre-collision, second-level pre-collision and third-level pre-collision. The higher the pre-collision level is, the higher the probability of collision is, and the stricter the corresponding high-voltage unloading parameter processing logic is.

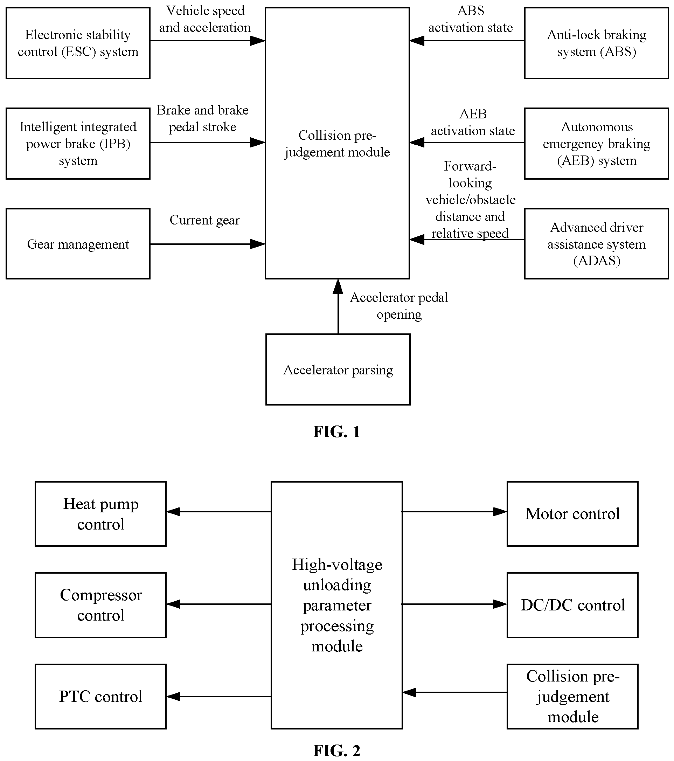

The schematic diagram of collision pre-judgement is as shown in FIG. 1. The collision pre-judgement module acquires vehicle speed and acceleration signals from an electronic stability control (ESC) system, brake and brake pedal stroke signals from an intelligent integrated power brake (IPB) system, a current gear signal from a gear management system, an accelerator pedal opening signal from an accelerator parsing system, and a distance and relative speed of a forward-looking vehicle/an obstacle from an advanced driver assistance system (ADAS), an AEB activation state from an AEB (Autonomous Emergency Braking) system, and an ABS activation state from an ABS (Anti-lock Braking System).

The logic of the collision pre-judgement module is as follows.

Input signals of the collision pre-judgement module include the vehicle speed, the acceleration, the gear, the accelerator pedal opening, the brake pedal stroke, the ABS activation state, the AEB activation state, and the distance and the relative speed of the forward-looking obstacle/vehicle, and other signals.

The output signal of the collision pre-judgement module is the pre-collision level.

A collision pre-judgement system calculates the pre-collision duration based on the distance and the relative speed of the forward-looking vehicle/obstacle input by the ADAS.

Zero-level pre-collision: no pre-collision whose level is greater than level zero is triggered, or when it is in a pre-collision whose level is greater than level zero and any one of the following conditions is satisfied: the accelerator pedal opening is greater than U4, the brake pedal opening is less than B4 and the deceleration is less than A4, the pre-collision level is equal to zero-level pre-collision.

First-level pre-collision: the current gear is the D gear, the accelerator pedal opening is less than U1, the brake pedal opening is greater than B1, the deceleration is greater than A1, and the current vehicle speed is greater than V1; or ,the ABS is activated.

Second-level pre-collision: the current gear is the D gear, the ABS is activated, the accelerator pedal opening is less than U2, the brake pedal opening is greater than B2, the change rate of the brake pedal stroke in the current braking cycle is greater than db1, the deceleration is greater than A2 and the current vehicle speed is greater than V2.

Third-level pre-collision: the current gear is the D gear, the ABS is activated, the accelerator pedal opening is less than U3, the brake pedal opening is greater than B3, the change rate of the brake pedal stroke in the current braking cycle is greater than db2, and the deceleration is greater than A3, and the vehicle speed is greater than V3; or the current gear is the D gear, the AEB is activated, and the pre-collision duration is less than t1.

The above parameters can all be calibrated through actual vehicle tests.

The high-voltage unloading parameter processing module mainly processes unloading parameters of high-voltage electric components. The unloading parameter is a time of turning off the high-voltage electric component (which may also be called a duration of unloading a voltage from the electric component). In initial program design, in order to satisfy drivability and the smoothness of control, a certain time is calibrated for the unloading time, such as motor torque request MAP filtering (or graph filtering), PTC unloading step processing, and smooth decrease of a rotating speed of a compressor. This processing module adjusts the unloading parameters (durations of unloading the voltage) of corresponding high-voltage electric components according to different pre-collision levels to achieve rapid unloading. The parameter of each component must be adjusted within the scope of its own unloading capability.

The high-voltage unloading parameter processing is as shown in FIG. 2. The high-voltage unloading parameter processing module adjusts parameters of the following high-voltage electric components: the heat pump control system, the compressor control system, the heater PTC (Positive Temperature Coefficient) control system, the motor control system, the DC/DC control system, and the collision pre-judgement module. The specific logic of high-voltage unloading parameter processing is as follows.

Each high-voltage electric component needs to receive the pre-collision level.

When receiving a zero-level pre-collision signal, the high-voltage unloading parameter processing module controls each high-voltage electric component to be implemented according to an initial unloading parameter.

When receiving a first-level pre-collision signal, the high-voltage unloading parameter processing module adjusts the unloading parameter (including a control instruction terminal and an execution terminal) of each high-voltage electric component to half of the initial unloading parameter, where the unloading time is shortened by half and high-voltage energy management is executed according to original demands.

When receiving a second-level pre-collision signal, the high-voltage unloading parameter processing module adjusts the unloading parameter of each high-voltage electric component at its highest unloading capability, where high-voltage energy management is executed according to original demands.

When receiving a third-level pre-collision signal, the high-voltage unloading parameter processing module adjusts the unloading parameter of each high-voltage electric component at its highest unloading capability, where a high-voltage energy management module requests to close high-voltage electric components except a DC/DC, a motor executes the ASC system at the highest capability of the system and consumes excess energy by body heating, and meanwhile, a control system controls a coolant flow to the maximum and a fan speed to the maximum.

The present disclosure further provides a vehicle. The vehicle includes the parameter setting apparatus provided by the foregoing embodiments.

Although the present disclosure is described in detail with reference to the foregoing embodiments, it may be understood by those of ordinary skill in the art that they can still make modifications to the technical solutions disclosed in the above various embodiments or equivalent replacements on part of their technical features, and these modifications or replacements do not depart the nature of the corresponding technical solutions from the spirit and scope of the technical solutions of the various embodiments of the present disclosure.

## Claims

1. A parameter setting method, comprising:
determining a pre-collision level of a vehicle according to operation parameters of the vehicle, wherein the pre-collision level is configured to represent a probability that the vehicle is about to crash; and
setting a duration of unloading a voltage from an electric component of the vehicle according to the pre-collision level.

2. The method according to claim 1, wherein the operation parameters of the vehicle comprise:
a vehicle speed, acceleration, a gear, an accelerator pedal opening, a brake pedal stroke, an anti-lock braking system (ABS) activation state, an autonomous emergency braking (AEB) activation state, a distance between a forward-looking obstacle and the vehicle, a relative speed of the forward-looking obstacle and the vehicle, or any combination thereof.

3. The method according to claim 1 or 2, wherein the pre-collision level of the vehicle is one of levels; and at different levels of the levels, set durations of unloading the voltage are different.

4. The method according to claim 3, wherein the levels comprise a level zero, a level one, a level two and a level three ranked in an ascending order.

5. The method according to claim 4, wherein each of the levels has corresponding conditions, and when conditions corresponding to any one of the levels are satisfied, the any one of the levels is the pre-collision level; and the method satisfies at least one of following conditions:
conditions corresponding to the level zero comprise: conditions corresponding to levels other than the level zero among the levels are not satisfied, an accelerator pedal opening is greater than a first opening, a brake pedal opening is less than a second opening, or deceleration is less than first deceleration;
conditions corresponding to the level one comprise: a current gear is a forward D gear, the accelerator pedal opening is less than a third opening, the brake pedal opening is greater than a fourth opening, the deceleration is greater than the first deceleration and a current vehicle speed is greater than a first vehicle speed; or the ABS is activated;
conditions corresponding to the level two comprise: the current gear is a D gear, the ABS is activated, the accelerator pedal opening is less than a fifth opening, the brake pedal opening is greater than a sixth opening, a change rate of the brake pedal stroke is greater than a first change rate in a current braking cycle, the deceleration is greater than second deceleration and the current vehicle speed is greater than a second vehicle speed; and
conditions corresponding to the level three comprise: the current gear is the D gear, the ABS is activated, the accelerator pedal opening is less than a seventh opening, the brake pedal opening is greater than an eighth opening, the change rate of the brake pedal stroke is greater than a second change rate in the current braking cycle, the deceleration is greater than third deceleration and the current vehicle speed is greater than a third vehicle speed; or the current gear is the D gear, the AEB is activated and a pre-collision duration is less than a first duration, and
wherein the pre-collision duration is calculated based on the distance between the forward-looking obstacle and the vehicle, and a relative speed of the front-seen obstacle and the vehicle.

6. The method according to claim 5, wherein following parameters are calibrated through actual vehicle tests:
the third opening, the fifth opening, the third opening, the first opening, the first deceleration, the second deceleration, the third deceleration, the first deceleration, the fourth opening, the sixth opening, the eighth opening, the second opening, the first vehicle speed, the second vehicle speed, the third vehicle speed, the first change rate and the second change rate.

7. The method according to claim 5 or 6, wherein the pre-collision duration is equal to the distance between the forward-looking obstacle and the vehicle divided by the relative speed of the forward-looking obstacle and the vehicle.

8. The method according to any one of claims 4 to 7, wherein the electric component has an initial duration of unloading the voltage; and setting the duration of unloading the voltage from the electric component of the vehicle according to the pre-collision level comprises:
setting the duration of unloading the voltage from the electric component to the initial duration, when the pre-collision level is the level zero;
setting the duration of unloading the voltage from the electric component to half of the initial duration, when the pre-collision level is the level one;
setting the duration of unloading the voltage from the electric component to a shortest duration of unloading the voltage from the electric component, when the pre-collision level is the level two, wherein the shortest duration of unloading the voltage from the electric component is less than the half of the initial duration; and
setting the duration of unloading the voltage from the electric component to the shortest duration of unloading the voltage from the electric component, closing a heat pump control system, a compressor control system, a heater PTC control system, a motor control system, a direct current/direct current (DC/DC) control system and/or a collision pre-judgement configured to determine the pre-collision level, controlling a motor to execute an active stability control (ASC) system at a maximum capability, controlling a coolant flow to a maximum, and controlling a fan speed to a maximum, when the pre-collision level is the level three.

9. The method according to any one of claims 1 to 8, wherein the vehicle comprises a DC/DC converter configured to convert one DC voltage to another DC voltage; and an operation voltage of the electric component is greater than the minimum of the one DC voltage and the another DC voltage.

10. A parameter setting apparatus, comprising a collision pre-judgement module and an unloading parameter processing module, wherein
the collision pre-judgement module is configured to determine a pre-collision level of a vehicle according to operation parameters of the vehicle, wherein the pre-collision level is configured to represent a probability that the vehicle is about to crash; and
a setting module is configured to set a duration of unloading a voltage from an electric component of the vehicle according to the pre-collision level.

11. The parameter setting apparatus according to claim 10, wherein the operation parameters of the vehicle comprise:
a vehicle speed, acceleration, a gear, an accelerator pedal opening, a brake pedal stroke, an ABS activation state, an AEB activation state, a distance between a forward-looking obstacle and the vehicle, a relative speed of the forward-looking obstacle and the vehicle, or any combination thereof.

12. The parameter setting apparatus according to claim 10 or 11, wherein the pre-collision level of the vehicle is one of levels; and at different levels of the levels, set durations of unloading the voltage are different.

13. The parameter setting apparatus according to claim 12, wherein the levels comprise a level zero, a level one, a level two and a level three ranked in an ascending order.

14. The parameter setting apparatus according to claim 13, wherein each of the levels has corresponding conditions, and when conditions corresponding to any one of the levels are satisfied, the any one of the levels is the pre-collision level; and the parameter setting apparatus satisfies at least one of following conditions:
conditions corresponding to the level zero comprise: conditions corresponding to levels other than the level zero among the levels are not satisfied, an accelerator pedal opening is greater than a first opening, a brake pedal opening is less than a second opening, or deceleration is less than first deceleration;
conditions corresponding to the level one comprise: a current gear is a forward D gear, the accelerator pedal opening is less than a third opening, the brake pedal opening is greater than a fourth opening, the deceleration is greater than the first deceleration and a current vehicle speed is greater than a first vehicle speed; or the ABS is activated;
conditions corresponding to the level two comprise: the current gear is a D gear, the ABS is activated, the accelerator pedal opening is less than a fifth opening, the brake pedal opening is greater than a sixth opening, a change rate of the brake pedal stroke is greater than a first change rate in a current braking cycle, the deceleration is greater than second deceleration and the current vehicle speed is greater than a second vehicle speed; and
conditions corresponding to the level three comprise: the current gear is the D gear, the ABS is activated, the accelerator pedal opening is less than a seventh opening, the brake pedal opening is greater than an eighth opening, the change rate of the brake pedal stroke is greater than a second change rate in the current braking cycle, the deceleration is greater than third deceleration, and the current vehicle speed is greater than a third vehicle speed; or the current gear is the D gear, the AEB is activated, and a pre-collision duration is less than a first duration, and
wherein the pre-collision duration is calculated based on the distance between the forward-looking obstacle and the vehicle, and a relative speed of the forward-looking obstacle and the vehicle.

15. The parameter setting apparatus according to claim 14, wherein following parameters are calibrated through actual vehicle tests:
the third opening, the fifth opening, the third opening, the first opening, the first deceleration, the second deceleration, the third deceleration, the first deceleration, the fourth opening, the sixth opening, the eighth opening, the second opening, the first vehicle speed, the second vehicle speed, the third vehicle speed, the first change rate and the second change rate.

16. The parameter setting apparatus according to claim 14 or 15, wherein the pre-collision duration is equal to the distance between the forward-looking obstacle and the vehicle divided by the relative speed of the forward-looking obstacle and the vehicle.

17. The parameter setting apparatus according to any one of claims 13 to 16, wherein the electric component has an initial duration of unloading the voltage; and the setting module is configured to:
set the duration of unloading the voltage from the electric component to the initial duration, when the pre-collision level is the level zero;
set the duration of unloading the voltage from the electric component to half of the initial duration, when the pre-collision level is the level one;
set the duration of unloading the voltage from the electric component to a shortest duration of unloading the voltage from the electric component, when the pre-collision level is the level two, wherein the shortest duration of unloading the voltage from the electric component is less than the half of the initial duration; and
set the duration of unloading the voltage from the electric component to the shortest duration of unloading the voltage from the electric component, close a heat pump control system, a compressor control system, a heater PTC control system, a motor control system, a direct current/direct current (DC/DC) control system and/or a collision pre-judgement module configured to determine the pre-collision level, control a motor to execute an active stability control (ASC) system at a maximum capability, control a coolant flow to a maximum, and control a fan speed to a maximum, when the pre-collision level is the level three.

18. A vehicle, comprising the parameter setting apparatus as defined in any one of claims 1 to 17.
